# EUROPEAN PATENT SPECIFICATION

(11) **EP 4 475 446 B1**
(45) Date of publication and mention of the grant of the patent: **27.05.2026**
(21) Application number: 24724925.3
(22) Date of filing: 04.04.2024
(51) Int. Cl.: H04B 1/401, H04B 7/06, H04B 1/00, H04B 1/04, H04B 1/18, H04W 88/06

(54) **ELECTRONIC DEVICE FOR CONTROLLING ANTENNA SWITCHING CIRCUIT**
ELEKTRONISCHE VORRICHTUNG ZUR STEUERUNG EINES ANTENNENSCHALTKREIS
DISPOSITIF ÉLECTRONIQUE POUR COMMANDER UN CIRCUIT DE COMMUTATION D'ANTENNE

(30) Priority: 24.04.2023 KR 20230053473; 24.05.2023 KR 20230067157
(43) Date of publication of application: 11.12.2024
(73) Proprietor: Samsung Electronics Co., Ltd., Suwon-si, Gyeonggi-do 16677 (KR)
(72) Inventor: SEONG, Kihyug, Suwon-si, Gyeonggi-do 16677 (KR); NA, Hyoseok, Suwon-si, Gyeonggi-do 16677 (KR); MOON, John, Suwon-si, Gyeonggi-do 16677 (KR); YANG, Dongil, Suwon-si, Gyeonggi-do 16677 (KR); LEE, Doohwan, Suwon-si, Gyeonggi-do 16677 (KR); LEE, Jeongheum, Suwon-si, Gyeonggi-do 16677 (KR)
(74) Representative: Gulde & Partner
(86) International application number: PCT/KR2024/004399
(87) International publication number: WO 2024/225643

(56) References cited:
- EP-A1- 2 437 569
- KR-A- 20150 124 873
- KR-A- 20200 095 954
- KR-A- 20210 015 101
- US-A1- 2014 286 308
- US-A1- 2017 244 456
- US-A1- 2019 312 336

## Description

### [Technical Field]

Various embodiments of the present disclosure relate to an electronic device and a method of operating the electronic device, and more particularly, to an electronic device for controlling an antenna switching circuit.

### [Background Art]

A variety of electronic devices have been widely distributed, such as smartphones, tablet PCs, portable multimedia players (PMPs), personal digital assistants (PDAs), laptop personal computers (PCs), or wearable devices.

Recent electronic devices may support various communication methods. For example, the electronic device may support a variety of communication including cellular communication, near-field wireless communication, communication for positioning, and satellite communication. Some of various communication methods may be performed over similar frequency bands. For example, the electronic device may perform cellular communication over a particular frequency band (e.g., 2.4 GHz) and perform near-field wireless communication (e.g., Bluetooth or Wi-Fi) over a frequency band (e.g., 2.4 GHz) that at least partially overlaps the particular frequency band. The electronic devices may use the same antenna to perform communication using frequency bands that at least partially overlap one another. In order to improve communication performance, the electronic device may have an antenna switching circuit configured to electrically connect an antenna and one of a plurality of matching circuits for impedance matching. The electronic device may control the antenna switching circuit to electrically connect the antenna and the matching circuit corresponding to a frequency band in use.

The information described above may be provided as the related art for the purpose of enhancing the understanding of the present disclosure. No assertion or determination is made with respect to the applicability of any of the above-mentioned as the prior art related to the present disclosure.

Conventional devices are known form US 2019/312336 A1, US 2017/244456 A1 and KR 2015 0124873 A.

### [Disclosure of Invention]

### [Technical Problem]

The antenna switching circuit of the electronic device may be controlled by a communication processor of the electronic device. The communication processor may identify a frequency band being used by the electronic device, select a matching circuit suitable for transmitting and/or receiving signals in the frequency band being used by the electronic device, and control the antenna switching circuit so that the selected matching circuit and the antenna may be electrically connected.

However, the electronic device may temporarily or non-temporarily switch the communication processor to a deactivated state for various reasons. According to one example, the electronic device may switch the communication processor to the deactivated state because of activation of an airplane mode.

Near-field wireless communication may be activated when the electronic device is in a state of the airplane mode. In order to improve performance in transmitting or receiving signals in a frequency band to be used to perform the near-field wireless communication, the electronic device needs to control the antenna switching circuit to electrically connect the antenna and the matching circuit corresponding to the frequency band to be used to perform the near-field wireless communication. However, the antenna switching circuit cannot be controlled because the communication processor is deactivated, and the receiving performance or transmitting performance of the antenna may be degraded because the antenna cannot be electrically connected to the matching circuit corresponding to the frequency band to be used to perform the near-field wireless communication. In case that the performance of the antenna is degraded, the quality of the near-field wireless communication may decrease, and electric power consumption for performing the near-field wireless communication may increase.

Technical problems to be solved by the present document are not limited to the above-mentioned technical problems, and other technical problems, which are not mentioned above, may be clearly understood from the following descriptions by those skilled in the art to which the present disclosure pertains.

### [Solution to Problem]

The invention is set out in the appended set of claims.

### [Advantageous Effects of Invention]

According to the electronic device according to the embodiment, the application processor may control the antenna switching circuit in case that the communication processor is deactivated. The electronic device may control the antenna switching circuit to electrically connect the antenna and the matching circuit suitable for the frequency band being currently used even in the state in which the communication processor is deactivated, thereby reducing (or preventing) the degradation of the communication performance and reducing (or preventing) an increase in electric power consumption caused by the degradation of the communication performance.

The effects obtained by the present disclosure are not limited to the aforementioned effects, and other effects, which are not mentioned above, will be clearly understood by those skilled in the art from the following description.

### [Brief Description of Drawings]

FIG. 1 is a block diagram of an electronic device according to various embodiments of the present disclosure.
FIG. 2 is a block diagram of the electronic device for supporting legacy network communication and 5G network communication according to various embodiments.
FIG. 3 is a block diagram illustrating an electronic device according to one example.
FIG. 4 is a block diagram illustrating the electronic device according to one example.
FIG. 5 is a block diagram illustrating the electronic device according to one example.
FIG. 6 is a block diagram illustrating the electronic device according to one example.
FIG. 7 is an operational flowchart illustrating a method of operating the electronic device according to one example.
FIG. 8 is an operational flowchart illustrating the method of operating the electronic device according to one example.

### [Mode for the Invention]

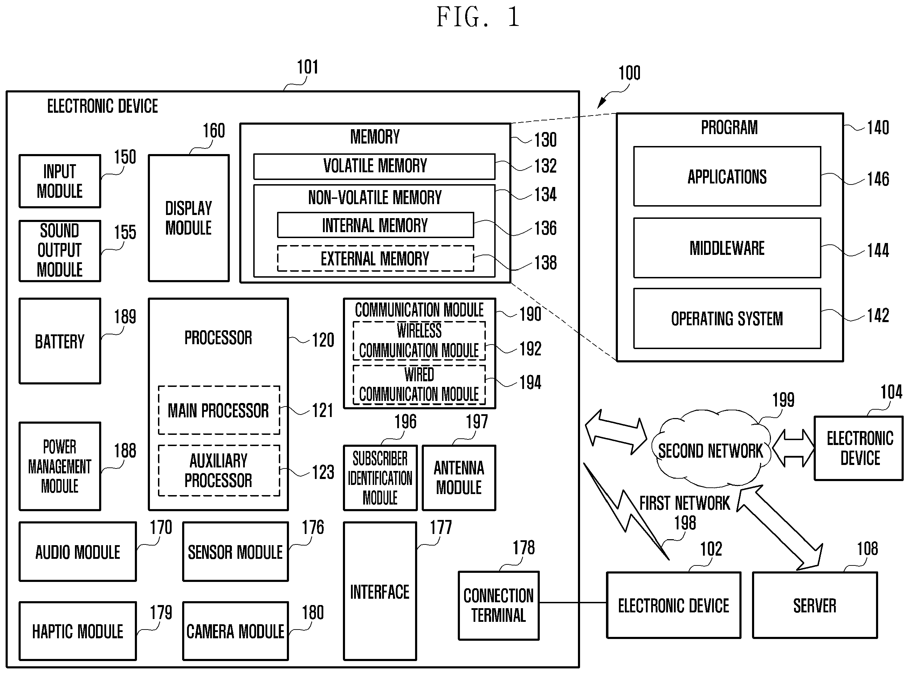

FIG. 1 is a block diagram illustrating an electronic device in a network environment according to an embodiment of the disclosure. Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment of the disclosure, the electronic device 101 may communicate with the electronic device 104 via the server 108. According to an embodiment of the disclosure, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments of the disclosure, at least one (e.g., the display device 160 or the camera module 180) of the components may be omitted from the electronic device 101, or one or more other components may be added in the electronic device 101. In some embodiments of the disclosure, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment of the disclosure, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment of the disclosure, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment of the disclosure, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment of the disclosure, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment of the disclosure, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to an embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment of the disclosure, all or some of operations to be executed at the electronic device 101 may be executed at one or more of the external electronic devices 102 or 104. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

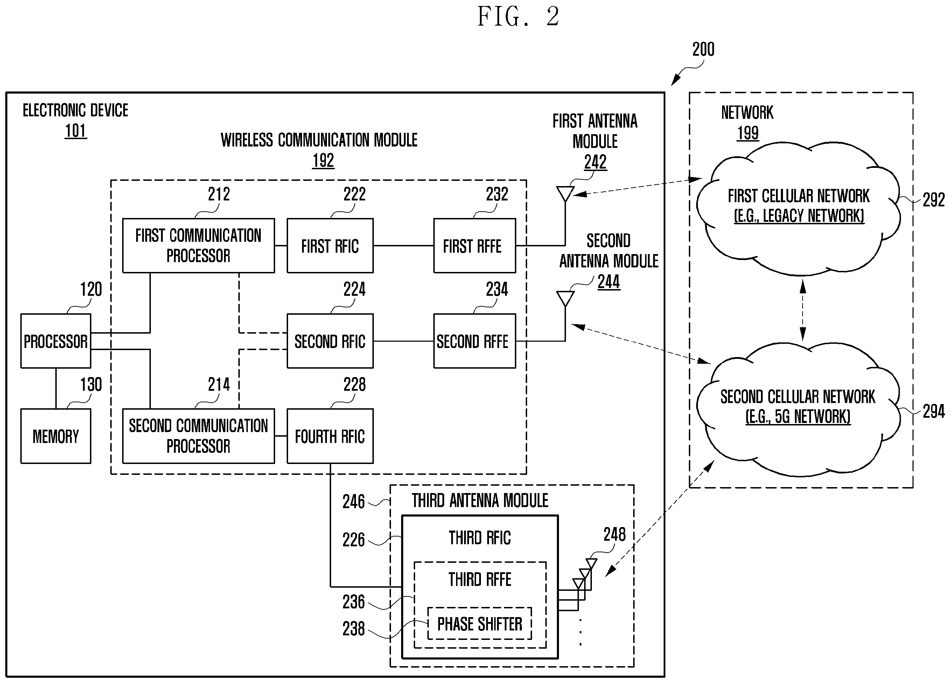

FIG. 2 is a block diagram 200 of an electronic device 101 for supporting legacy network communication and 5G network communication according to an embodiment of the disclosure. Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment of the disclosure, the electronic device 101 may further include at least one component among the components illustrated in FIG. 1, and the network 199 may further include at least one other network. According to an embodiment of the disclosure, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment of the disclosure, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments of the disclosure, the first network may be a legacy network including 2G, 3G, 4G, or long term evolution (LTE) network. The second communication processor 214 may establish a communication channel corresponding to a designated band (e.g., approximately 6GHz to 60 GHz) among bands to be used for wireless communication with the second network 294, and may support 5G network communication via the established channel. According to certain embodiments of the disclosure, the second network 294 may be a 5G network defined in 3GPP. Additionally, according to an embodiment of the disclosure, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment of the disclosure, the first communication processor 212 and the second communication processor 214 may be implemented in a single chip or a single package. According to certain embodiments of the disclosure, the first communication processor 212 or the second communication processor 214 may be implemented in a single chip or a single package, together with the processor 120, the auxiliary processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment of the disclosure, the third RFFE 236 may be implemented as a part of the third RFIC 226.

According to an embodiment of the disclosure, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment of the disclosure, the first RFIC 222 and the second RFIC 224 may be implemented as a single chip or at least a part of the single package. According to an embodiment of the disclosure, the first RFFE 232 and the second RFFE 234 may be implemented as a single chip or at least a part of the single package. According to an embodiment of the disclosure, at least one antenna module of the first antenna module 242 or the second antenna module 244 may be omitted, or may be combined with another antenna module so as to process RF signals in a plurality of bands.

According to an embodiment of the disclosure, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment of the disclosure, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

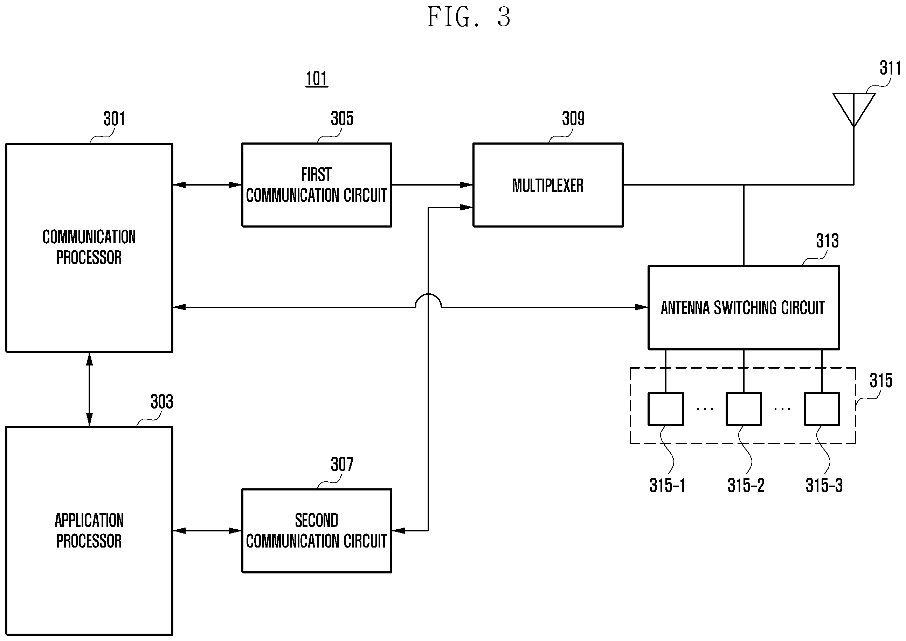

FIG. 3 is a block diagram illustrating an electronic device according to one example.

With reference to FIG. 3, an electronic device (e.g., the electronic device 101 in FIG. 1) according to one example may include a communication processor 301 (e.g., the auxiliary processor 123 in FIG. 1 or the first communication processor 212 in FIG. 2), an application processor 303 (e.g., the main processor 121 in FIG. 1 or the processor 120 in FIG. 2), a first communication circuit 305 (e.g., the communication module 190 in FIG. 1 or the first RFIC 222 and the second RFIC 224 in FIG. 2), a second communication circuit 307, a multiplexer 309, an antenna 311 (e.g., the antenna module 197 in FIG. 1 or the first antenna module 242, the second antenna module 244, and the third antenna module 248 in FIG. 2), an antenna switching circuit 313, and a matching circuit 315 including a plurality of matching circuits (e.g., a first matching circuit 315-1, a second matching circuit 315-2, or a third matching circuit 315-3).

According to one example, the communication processor 301 and the application processor 303 may be implemented as a single integrated module (or chip) or separate modules (or chips).

According to one example, the communication processor 301 may perform various operations for wireless communication with a cellular network. For example, the communication processor 301 may support the establishment of a communication channel in a band to be used for wireless communication with the cellular network and support wireless communication through the established communication channel.

According to one example, the first communication circuit 305 may be a communication circuit that performs first communication. The first communication circuit 305 may be electrically connected to the communication processor 301 and perform the first communication under the control of the communication processor 301. The first communication may include cellular communication. According to one example, the first communication may include at least one of third-generation cellular communication, fourth-generation cellular communication, and/or fifth-generation cellular communication. The first communication circuit 305 may perform various operations of processing a signal received from the communication processor 301 to perform the first communication. For example, the first communication circuit 305 may perform an operation of modulating a signal received from the communication processor 301. For example, the first communication circuit 305 may perform a frequency modulation operation of converting a signal in a baseband into a radio frequency (RF) signal to be used for cellular communication. The first communication circuit 305 may perform an operation of demodulating a signal received from the outside through the antenna 311. For example, the first communication circuit 305 may perform a frequency demodulation operation of converting a radio frequency (RF) signal into a signal in a baseband.

According to one example, the second communication circuit 307 may be a communication circuit that performs second communication. The second communication circuit 307 may be electrically connected to the application processor 303 and perform the second communication under the control of the application processor 303. The second communication may be communication different from the first communication. The second communication may be communication that may be performed regardless of the control of the communication processor 301. According to one example, the second communication may include near-field wireless communication (e.g., Bluetooth, Wi-Fi, and/or UWB). According to another example, the second communication may include satellite communication that is communication using a non-terrestrial network.

According to one example, the application processor 303 may control various constituent elements of the electronic device 101. The application processor 303 may execute an application non-temporarily or temporarily stored in a memory (e.g., the memory 130 in FIG. 1) on the basis of a user input. The application processor 303 may control various constituent elements related to a service to perform the service provided by the application. For example, in case that the application is an application that performs services (e.g., video calling, voice calling, and/or streaming services) using the first communication or the second communication, the application processor 303 may transmit data (e.g., image data and/or voice data) related to the service to the communication processor 301 or the second communication circuit 307 to transmit the data related to the service. Alternatively, the application processor 303 may control the constituent element (e.g., the display device 160 in FIG. 1 or the audio module 170 in FIG. 1) to receive the data, which are received from the external electronic device (e.g., the external electronic device 104 in FIG. 1), from the communication processor 301 or the second communication circuit 307 and output the received data.

According to one example, a frequency band of the first communication and a frequency band of the second communication may at least partially overlap each other. Therefore, the electronic device 101 may be configured to use the same antenna to receive a signal through the first communication and/or receive a signal through the second communication. The antenna 311 may be an entity that transmits/receives the signal through the first communication and/or transmits/receives the signal through the second communication. The signal received through the antenna 311 may be transmitted to one of the first communication circuit 305 and the second communication circuit 307 through the multiplexer 309. The multiplexer 309 may be a constituent element that transmits the signal received through the antenna 311 to one of the first communication circuit 305 and the second communication circuit 307. The multiplexer 309 may be changed to various constituent elements including a diplexer, a triplexer, a filter, and a switch other than the multiplexer 309. According to one example, in case that the electronic device 101 operates in a frequency division manner in which the electronic device 101 performs the first communication using a particular frequency band and performs the second communication using another frequency band, the multiplexer 309 may transmit the signal in the particular frequency band to the first communication circuit 305 and transmit the signal in another frequency band to the second communication circuit 307. According to one example, the electronic device 101 performs communication in a time division manner in which the electronic device 101 performs the first communication at a particular time and performs the second communication at a time different from the particular time, the multiplexer 309 may be substituted with a switch. The electronic device 101 (or the communication processor 301) may control the switch to electrically connect the first communication circuit 305 and the antenna 311 for a particular time for which the first communication is performed, and the electronic device 101 (or the communication processor 301) may control the switch to electrically connect the second communication circuit 305 and the antenna 311 for another time for which the second communication is performed.

The antenna switching circuit 313 may electrically connect the antenna 311 and one of the matching circuits 315 (e.g., the first matching circuit 315-1, the second matching circuit 315-2, or the third matching circuit 315-3). The antenna switching circuit 313 may select one of the matching circuits 315 (e.g., the first matching circuit 315-1, the second matching circuit 315-2, or the third matching circuit 315-3) depending on the frequency band of the signal received or transmitted through the antenna 311. The antenna switching circuit 313 may include an antenna tuner. The antenna switching circuit 313 may operate under the control of the communication processor 301. The antenna switching circuit 313 may electrically connect the antenna 311 and one of the matching circuits 315 (e.g., the first matching circuit 315-1, the second matching circuit 315-2, or the third matching circuit 315-3) in response to a control signal transmitted by the communication processor 301. The control signal transmitted by the communication processor 301 may be a signal including information indicating a matching circuit to be connected to the antenna 311 and include an antenna code.

The matching circuit 315 may include various components (e.g., passive elements implemented as capacitors and inductors or active elements implemented as transistors) for performing impedance matching (e.g., matching input impedance or output impedance of the antenna 311 with 50 Ω) of the antenna 311. As described above, the antenna 311 may be used to perform the first communication and/or the second communication and be electrically connected to one of the matching circuits 315 (e.g., the first matching circuit 315-1, the second matching circuit 315-2, or the third matching circuit 315-3) to improve the performance in transmitting and/or receiving signals in a frequency band supported by the communication method.

The communication processor 301 may select a matching circuit, which is to be electrically connected to the antenna 311 among the matching circuits 315, depending on the frequency band of the communication (e.g., the first communication or the second communication) being performed by the electronic device 101, and the communication processor 301 may control the antenna switching circuit 313 so that the selected matching circuit and the antenna 311 are electrically connected.

According to one example, in case that the antenna 311 is electrically connected to the first matching circuit 315-1 to perform the first communication, the antenna 311 may exhibit higher performance than a case in which the antenna 311 is connected to another matching circuit (e.g., the second matching circuit 315-2 or the third matching circuit 315-3). The communication processor 301 may improve the performance of the antenna 311 by controlling the antenna switching circuit 313 so that the first matching circuit 315-1 and the antenna 311 are electrically connected when the first communication is performed.

According to one example, in case that the antenna 311 is electrically connected to the second matching circuit 315-2 to perform the second communication, the antenna 311 may exhibit higher performance than a case in which the antenna 311 is connected to another matching circuit (e.g., the first matching circuit 315-1 and the third matching circuit 315-3). The communication processor 301 may improve the performance of the antenna 311 by controlling the antenna switching circuit 313 so that the second matching circuit 315-2 and the antenna 311 are electrically connected when the second communication is performed.

As described above, the antenna switching circuit 313 may improve the performance of the antenna 311 by receiving, from the communication processor 301, a control signal for electrically connecting the antenna 311 and the matching circuit corresponding to the frequency band being currently used by the electronic device 101. However, in case that the communication processor 301 is temporarily or non-temporarily deactivated, the antenna switching circuit 311 may not electrically connect the antenna 311 and the matching circuit corresponding to the frequency band used by the electronic device 101.

According to one example, the electronic device 101 may switch to a mode (e.g., airplane mode) in which the communication processor 301 is temporarily or non-temporarily deactivated. As the electronic device 101 switches to the mode in which the communication processor 301 is temporarily or non-temporarily deactivated, the application processor 303 may switch the constituent elements (e.g., the communication processor 301, the first communication circuit 305, and the second communication circuit 307), which perform the communication, to the deactivated state. In the mode in which the communication processor 301 is temporarily or non-temporarily deactivated, the application processor 303 may activate the second communication for various reasons (e.g., activation of the application for performing the second communication and reception of a user input for activating the second communication), and the application processor 303 may activate the second communication circuit 307 to perform the second communication. However, because the communication processor 301 is in the deactivated state, the electronic device 101 may not transmit, to the antenna switching circuit 313, the control signal for electrically connecting the antenna 311 and the second matching circuit 315-2 to improve the performance of the second communication. The receiving performance of the antenna 311 may be degraded in case that the electronic device 101 performs the second communication in the state in which the second matching circuit 315-2 and the antenna 311 are not electrically connected. The degradation of the receiving performance of the antenna 311 may degrade the quality of the second communication and increase the electric power consumption as the second communication is performed.

Hereinafter, an example will be described in which the degradation of the quality of the second communication is reduced and/or the increase in electric power consumption is reduced by controlling the antenna switching circuit 313 even when the communication processor 301 is in the deactivated state.

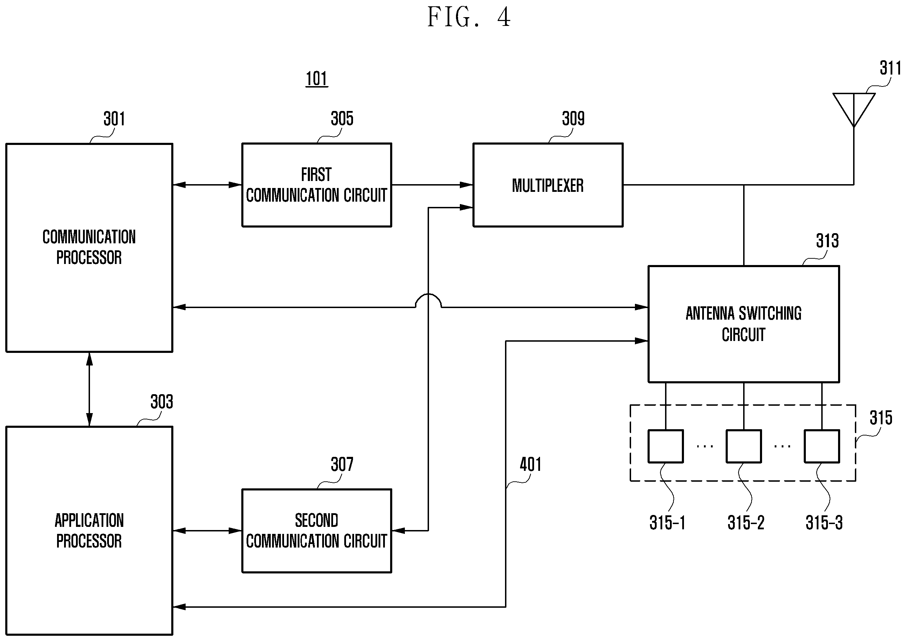

FIG. 4 is a block diagram illustrating the electronic device according to one embodiment.

With reference to FIG. 4, the electronic device (e.g., the electronic device 101 in FIG. 1) includes the communication processor 301 (e.g., the second communication processor 212 in FIG. 2), the application processor 303 (e.g., the processor 120 in FIG. 2), the first communication circuit 305 (e.g., the first RFIC 222 and the second RFIC 224 in FIG. 2), the second communication circuit 307, the multiplexer 309, the antenna 311 (e.g., the first antenna module 242, the second antenna module 244, and the third antenna module 248 in FIG. 2), the antenna switching circuit 313, and the matching circuit 315 including the plurality of matching circuits (e.g., the first matching circuit 315-1, the second matching circuit 315-2, or the third matching circuit 315-3).

The communication processor 301 may perform various operations for wireless communication with a cellular network. For example, the communication processor 301 may support the establishment of a communication channel in a band to be used for wireless communication with the cellular network and support wireless communication through the established communication channel.

The first communication circuit 305 is a communication circuit that performs first communication. The first communication circuit 305 is electrically connected to the communication processor 301 and performs the first communication under the control of the communication processor 301. The first communication may include cellular communication. According to one example, the first communication may include at least one of third-generation cellular communication, fourth-generation cellular communication, and/or fifth-generation cellular communication. The first communication circuit 305 may perform various operations of processing a signal received from the communication processor 301 to perform the first communication. For example, the first communication circuit 305 may perform an operation of modulating a signal received from the communication processor 301. For example, the first communication circuit 305 may perform a frequency modulation operation of converting a signal in a baseband into a radio frequency (RF) signal to be used for cellular communication. The first communication circuit 305 may perform an operation of demodulating a signal received from the outside through the antenna 311. For example, the first communication circuit 305 may perform a frequency demodulation operation of converting a radio frequency (RF) signal into a signal in a baseband.

The second communication circuit 307 is a communication circuit that performs second communication. The second communication circuit 307 is electrically connected to the application processor 303 and performs the second communication under the control of the application processor 303. The second communication may be communication different from the first communication. The second communication may be communication that may be performed regardless of the control of the communication processor 301. According to one example, the second communication may include near-field wireless communication (e.g., Bluetooth, Wi-Fi, and/or UWB). According to another example, the second communication may include satellite communication that is communication using a non-terrestrial network.

The first communication circuit 305 and the second communication circuit 307 use the same antenna (e.g., the antenna 311) to transmit or receive signals. However, depending on the frequency band of the second communication, the second communication circuit 307 may transmit or receive the signal through another antenna that is not the antenna 311 illustrated in FIG. 4.

According to one example, the application processor 303 may control various constituent elements of the electronic device 101. The application processor 303 may execute an application non-temporarily or temporarily stored in a memory (e.g., the memory 130 in FIG. 1) on the basis of a user input. The application processor 303 may control various constituent elements related to a service to perform the service provided by the application. For example, in case that the application is an application that performs services (e.g., video calling, voice calling, and/or streaming services) using the first communication or the second communication, the application processor 303 may transmit data (e.g., image data and/or voice data) related to the service to the communication processor 301 or the second communication circuit 307 to transmit the data related to the service. Alternatively, the application processor 303 may control the constituent element (e.g., the display device 160 in FIG. 1 or the audio module 170 in FIG. 1) to receive the data, which are received from the external electronic device (e.g., the external electronic device 104 in FIG. 1), from the communication processor 301 or the second communication circuit 307 and output the received data.

According to one example, a frequency band of the first communication and a frequency band of the second communication may at least partially overlap each other. Therefore, the electronic device 101 is configured to use the same antenna to receive a signal through the first communication and/or receive a signal through the second communication. The antenna 311 is an entity that transmits/receives the signal through the first communication and/or transmits/receives the signal through the second communication. The signal received through the antenna 311 is transmitted to at least one of the first communication circuit 305 and the second communication circuit 307 through the multiplexer 309. The multiplexer 309 is a constituent element that transmits the signal received through the antenna 311 to at least one of the first communication circuit 305 and the second communication circuit 307. The antenna 311 may be simultaneously connected to the plurality of communication circuits (e.g., the first communication circuit 305 and the second communication circuit 307) through the multiplexer 309. The multiplexer 309 may be changed to various constituent elements including a diplexer, a triplexer, an extractor, a filter, and a switch other than the multiplexer 309. According to one example, in case that the electronic device 101 operates in a frequency division manner in which the electronic device 101 performs the first communication using a particular frequency band and performs the second communication using another frequency band, the multiplexer 309 may transmit the signal in the particular frequency band to the first communication circuit 305 and transmit the signal in another frequency band to the second communication circuit 307. According to one example, the electronic device 101 operates in a time division manner in which the electronic device 101 performs the first communication at a particular time and performs the second communication at a time different from the particular time, the multiplexer 309 may be substituted with a switch. The electronic device 101 (or the communication processor 301) may control the switch to electrically connect the first communication circuit 305 and the antenna 311 for a particular time for which the first communication is performed, and the electronic device 101 (or the communication processor 301) may control the switch to electrically connect the second communication circuit 305 and the antenna 311 for another time for which the second communication is performed.

The antenna switching circuit 313 electrically connects the antenna 311 and one of the matching circuits 315 (e.g., the first matching circuit 315-1, the second matching circuit 315-2, or the third matching circuit 315-3).

According to one example, the antenna switching circuit 313 may output under the control of the communication processor 301 or the application processor 303. The antenna switching circuit 313 electrically connects the antenna 311 and one of the matching circuits 315 (e.g., the first matching circuit 315-1, the second matching circuit 315-2, or the third matching circuit 315-3) in response to a control signal transmitted by the communication processor 301 or a control signal transmitted by the application processor 303. The control signal transmitted by the communication processor 301 or the control signal transmitted by the application processor 303 may be a signal including information indicating a matching circuit to be connected to the antenna 311 and include an antenna code. The control signal may be transmitted to the antenna switching circuit 313 through various protocols (e.g., a mobile industry processor interface (MIPI), general-purpose input/output (GPIO), and inter-integrated circuit (I2C)) supported by the electronic device 101.

The plurality of matching circuits 315 may include various components (e.g., passive elements implemented as capacitors and inductors or active elements implemented as transistors) for performing impedance matching (e.g., matching input impedance or output impedance of the antenna 311 with 50 Ω) of the antenna 311. As described above, the antenna 311 is used to perform the first communication and/or the second communication and is electrically connected to one of the matching circuits 315 (e.g., the first matching circuit 315-1, the second matching circuit 315-2, or the third matching circuit 315-3) to improve the performance in transmitting and/or receiving signals in a frequency band supported by the communication method.

According to one example, the multiplexer 309 and the antenna switching circuit 313 may be implemented as a single module (e.g., a front-end module).

The communication processor 301 selects a matching circuit, which is to be electrically connected to the antenna 311 among the matching circuits 315, depending on the frequency band of the communication (e.g., the first communication or the second communication) being performed by the electronic device 101, and the communication processor 301 controls the antenna switching circuit 313 so that the selected matching circuit and the antenna 311 are electrically connected.

According to one example, in case that the antenna 311 is electrically connected to the first matching circuit 315-1 to perform the first communication, the antenna 311 may exhibit higher performance than a case in which the antenna 311 is connected to another matching circuit (e.g., the second matching circuit 315-2 or the third matching circuit 315-3). The communication processor 301 may improve the performance of the antenna 311 by controlling the antenna switching circuit 313 so that the first matching circuit 315-1 and the antenna 311 are electrically connected when the first communication is performed.

According to one example, in case that the antenna 311 is electrically connected to the second matching circuit 315-2 to perform the second communication, the antenna 311 may exhibit higher performance than a case in which the antenna 311 is connected to another matching circuit (e.g., the first matching circuit 315-1 and the third matching circuit 315-3). The communication processor 301 may improve the performance of the antenna 311 by controlling the antenna switching circuit 313 so that the second matching circuit 315-2 and the antenna 311 are electrically connected when the second communication is performed.

The antenna switching circuit 313 improves the performance of the antenna 311 by receiving, from the communication processor 301 or the application processor 303, a control signal for electrically connecting the antenna 311 and the matching circuit corresponding to the frequency band being currently used by the electronic device 101.

According to one example, the electronic device 101 may operate in a mode (e.g., general mode) in which the communication processor 301 is kept in an activated state. In case that the electronic device 101 operates in the mode in which the communication processor 301 is kept in the activated state, the communication processor 301 may select the matching circuit corresponding to the frequency band of the communication used by the electronic device 101 and control the antenna switching circuit 313 so that the selected matching circuit and the antenna 311 are electrically connected.

The communication processor 301 may identify a frequency band assigned to the electronic device 101 from the cellular network that supports the first communication, and the communication processor 301 may select the matching circuit corresponding to the assigned frequency band. The communication processor 301 may transmit, to the antenna switching circuit 313, a control signal including an antenna code for electrically connecting the selected matching circuit and the antenna 311 among the antenna codes stored in the memory (e.g., the memory 130 in FIG. 1). The communication processor 301 may transmit the control signal to the antenna switching circuit 313 through a line that electrically connects the communication processor 301 and the antenna switching circuit 313. The antenna switching circuit 313 receives the antenna code from the communication processor 301 and electrically connects the selected matching circuit and the antenna 311.

According to one example, the electronic device 101 may operate in a mode (e.g., flight mode or airplane mode) in which the communication processor 301 temporarily or non-temporarily switches to the deactivated state. Deactivating the communication processor 301 may refer to turning-off at least one or more communication function of the communication processor 301. Activating the airplane more ore the flight mode may deactivating all communication interface of the electronic device 101. For example, according to activation of the airplane mode or the flight mode, shot-range wireless communication and/or cellular communication activated on the electronic device 101 is deactivated. While the communication processor 301 is deactivated, the electronic device 101 may activate the short-range communication. For example, the electronic device 101 may activate the short-range wireless communication according to user input for activating the short-range wireless communication. In case that the electronic device 101 operates in the mode in which the communication processor 301 temporarily or non-temporarily switches to the deactivated state, the application processor 303, instead of the communication processor 301, controls the antenna switching circuit 313.

In case that the electronic device 101 operates in the mode in which the communication processor 301 temporarily or non-temporarily switches to the deactivated state, the application processor 303 identifies (or monitors) whether the second communication is activated.

In the mode in which the communication processor 301 temporarily or non-temporarily switches to the deactivated state, the application processor 303 activates the second communication for various reasons (e.g., activation of the application for performing the second communication and reception of a user input for activating the second communication).

The application processor 303 may perform a series of operations for improving the performance of the second communication as the second communication is activated. The application processor 303 controls the antenna switching circuit 313 to electrically connect the antenna 311 and the second matching circuit 315-2 for improving impedance matching performance in case that the application processor 303 needs to transmit or receive the signal in the frequency band of the second communication to improve the performance of the second communication.

The electronic device 101 may include a line 401 for electrically connecting the application processor 303 and the antenna switching circuit 313 in order to implement the control of the antenna switching circuit 313 by the application processor 303 in case that the communication processor 301 is temporarily or non-temporarily deactivated. The application processor 303 may transmit the control signal for controlling the antenna switching circuit 313 to the antenna switching circuit 313 through the line 401.

The application processor 303 may select the matching circuit (e.g., the second matching circuit 315-2) corresponding to the frequency band to be used for the second communication to activate the second communication. The application processor 303 may transmit the control signal, which includes the antenna code for electrically connecting the selected matching circuit (e.g., the second matching circuit 315-2) and the antenna 311 among the antenna codes stored in the memory 130, to the antenna switching circuit 313 through the line 401. The antenna switching circuit 313 may receive the antenna code from the application processor 303 and electrically connect the selected matching circuit and the antenna 311.

According to the above-mentioned example, in case that the communication processor 301 is temporarily or non-temporarily deactivated, the antenna switching circuit 313 may be configured to electrically connect the antenna 311 and one of the matching circuits 315 (e.g., the first matching circuit 315-1, the second matching circuit 315-2, or the third matching circuit 315-3) capable of exhibiting appropriate performance on the basis of the control signal transmitted by the application processor 303, thereby reducing (or preventing) the degradation of the performance of the second communication that occurs when (or, while, if) the communication processor 301 is temporarily or non-temporarily deactivated.

The application processor 303 may control the antenna switching circuit 313 so that the appropriate matching circuit is electrically connected to the antenna 311 even in case that the frequency band of the second communication is changed.

The application processor 303 may detect whether the frequency band of the second communication or the channel of the second communication is changed. According to one example, the application processor 303 may detect that a process in which the second communication is performed over a first frequency band (e.g., 2.4 GHz) of the second communication is changed so that the second communication is performed over a second frequency band (e.g., 5 GHz) of the second communication.

According to one example, the application processor 303 may control the antenna switching circuit 313 to electrically connect the antenna 311 and the matching circuit (e.g., the third matching circuit 315-3) for improving impedance matching performance in case that the application processor 303 transmits or receives the signal of the second frequency band to improve the performance of the second communication.

The application processor 303 may select the matching circuit (e.g., the third matching circuit 315-3) corresponding to the second frequency band. The application processor 303 may transmit the control signal, which includes the antenna code for electrically connecting the selected matching circuit (e.g., the third matching circuit 315-3) and the antenna 311 among the antenna codes stored in the memory 130, to the antenna switching circuit 313 through the line 401. The antenna switching circuit 313 may receive the antenna code from the application processor 303 and electrically connect the selected matching circuit and the antenna 311.

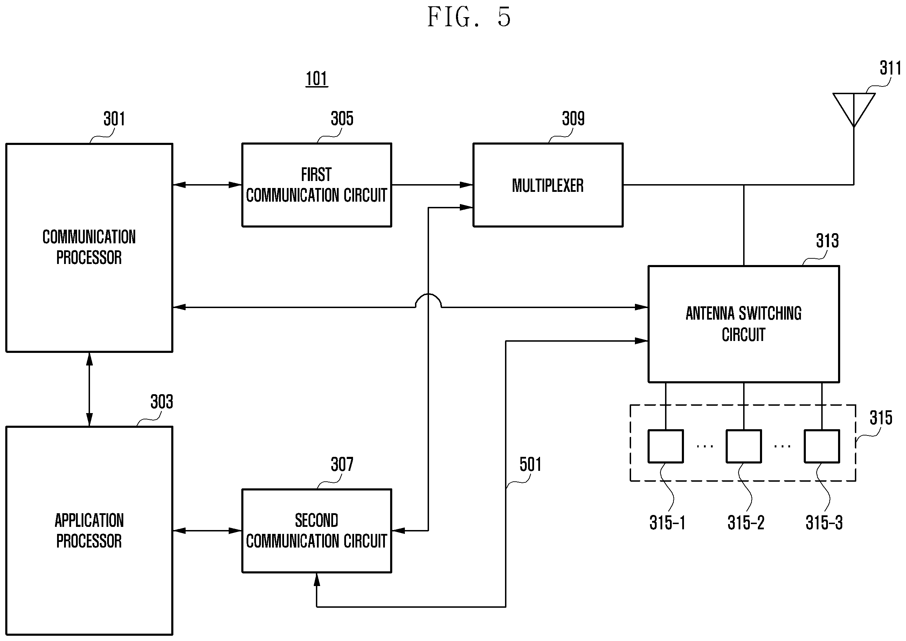

FIG. 5 is a block diagram illustrating the electronic device according to one embodiment.

With reference to FIG. 5, the electronic device (e.g., the electronic device 101 in FIG. 1) includes the communication processor 301 (e.g., the second communication processor 212 in FIG. 2), the application processor 303 (e.g., the processor 120 in FIG. 2), the first communication circuit 305 (e.g., the first RFIC 222 and the second RFIC 224 in FIG. 2), the second communication circuit 307, the multiplexer 309, the antenna 311 (e.g., the first antenna module 242, the second antenna module 244, and the third antenna module 248 in FIG. 2), the antenna switching circuit 313, and the matching circuit 315 including the plurality of matching circuits (e.g., the first matching circuit 315-1, the second matching circuit 315-2, or the third matching circuit 315-3).

The communication processor 301 may perform various operations for wireless communication with a cellular network. For example, the communication processor 301 may support the establishment of a communication channel in a band to be used for wireless communication with the cellular network and support wireless communication through the established communication channel.

The first communication circuit 305 is a communication circuit that performs first communication. The first communication circuit 305 is electrically connected to the communication processor 301 and performs the first communication under the control of the communication processor 301. The first communication may include cellular communication. According to one example, the first communication may include at least one of third-generation cellular communication, fourth-generation cellular communication, and/or fifth-generation cellular communication. The first communication circuit 305 may perform various operations of processing a signal received from the communication processor 301 to perform the first communication. For example, the first communication circuit 305 may perform an operation of modulating a signal received from the communication processor 301. For example, the first communication circuit 305 may perform a frequency modulation operation of converting a signal in a baseband into a radio frequency (RF) signal to be used for cellular communication. The first communication circuit 305 may perform an operation of demodulating a signal received from the outside through the antenna 311. For example, the first communication circuit 305 may perform a frequency demodulation operation of converting a radio frequency (RF) signal into a signal in a baseband.

The second communication circuit 307 is a communication circuit that performs second communication. The second communication circuit 307 is electrically connected to the application processor 303 and performs the second communication under the control of the application processor 303. The second communication is communication different from the first communication. The second communication may be communication that may be performed regardless of the control of the communication processor 301. According to one example, the second communication may include near-field wireless communication (e.g., Bluetooth, Wi-Fi, and/or UWB). According to another example, the second communication may include satellite communication that is communication using a non-terrestrial network.

The first communication circuit 305 and the second communication circuit 307 use the same antenna (e.g., the antenna 311) to transmit or receive signals. However, depending on the frequency band of the second communication, the second communication circuit 307 may transmit or receive the signal through another antenna that is not the antenna 311 illustrated in FIG. 5.

The application processor 303 may control various constituent elements of the electronic device 101. The application processor 303 may execute an application non-temporarily or temporarily stored in a memory (e.g., the memory 130 in FIG. 1) on the basis of a user input. The application processor 303 may control various constituent elements related to a service to perform the service provided by the application. For example, in case that the application is an application that performs services (e.g., video calling, voice calling, and/or streaming services) using the first communication or the second communication, the application processor 303 may transmit data (e.g., image data and/or voice data) related to the service to the communication processor 301 or the second communication circuit 307 to transmit the data related to the service. Alternatively, the application processor 303 may control the constituent element (e.g., the display device 160 in FIG. 1 or the audio module 170 in FIG. 1) to receive the data, which are received from the external electronic device (e.g., the external electronic device 104 in FIG. 1), from the communication processor 301 or the second communication circuit 307 and output the received data.

According to one example, a frequency band of the first communication and a frequency band of the second communication may at least partially overlap each other. Therefore, the electronic device 101 is configured to use the same antenna to receive a signal through the first communication and/or receive a signal through the second communication. The antenna 311 is an entity that transmits/receives the signal through the first communication and/or transmits/receives the signal through the second communication. The signal received through the antenna 311 is transmitted to at least one of the first communication circuit 305 and the second communication circuit 307 through the multiplexer 309. The multiplexer 309 is a constituent element that transmits the signal received through the antenna 311 to at least one of the first communication circuit 305 and the second communication circuit 307. The antenna 311 may be simultaneously connected to the plurality of communication circuits (e.g., the first communication circuit 305 and the second communication circuit 307) through the multiplexer 309. The multiplexer 309 may be changed to various constituent elements including a diplexer, a triplexer, an extractor, a filter, and a switch other than the multiplexer 309. According to one example, in case that the electronic device 101 operates in a frequency division manner in which the electronic device 101 performs the first communication using a particular frequency band and performs the second communication using another frequency band, the multiplexer 309 may transmit the signal in the particular frequency band to the first communication circuit 305 and transmit the signal in another frequency band to the second communication circuit 307. According to one example, the electronic device 101 operates in a time division manner in which the electronic device 101 performs the first communication at a particular time and performs the second communication at a time different from the particular time, the multiplexer 309 may be substituted with a switch. The electronic device 101 (or the communication processor 301) may control the switch to electrically connect the first communication circuit 305 and the antenna 311 for a particular time for which the first communication is performed, and the electronic device 101 (or the communication processor 301) may control the switch to electrically connect the second communication circuit 305 and the antenna 311 for another time for which the second communication is performed.

The antenna switching circuit 313 electrically connects the antenna 311 and one of the matching circuits 315 (e.g., the first matching circuit 315-1, the second matching circuit 315-2, or the third matching circuit 315-3).

According to one example, the antenna switching circuit 313 may output under the control of the communication processor 301 or the application processor 303. The antenna switching circuit 313 electrically connects the antenna 311 and one of the matching circuits 315 (e.g., the first matching circuit 315-1, the second matching circuit 315-2, or the third matching circuit 315-3) in response to a control signal transmitted by the communication processor 301 or a control signal transmitted by the application processor 303. The control signal transmitted by the communication processor 301 or the control signal transmitted by the application processor 303 is a signal including information indicating a matching circuit to be connected to the antenna 311 and include an antenna code. The control signal may be transmitted to the antenna switching circuit 313 through various protocols (e.g., a mobile industry processor interface (MIPI), general-purpose input/output (GPIO), and inter-integrated circuit (I2C)) supported by the electronic device 101.

The matching circuit 315 may include various components (e.g., passive elements implemented as capacitors and inductors or active elements implemented as transistors) for performing impedance matching (e.g., matching input impedance or output impedance of the antenna 311 with 50 Ω) of the antenna 311. As described above, the antenna 311 may be used to perform the first communication and/or the second communication and be electrically connected to one of the matching circuits 315 (e.g., the first matching circuit 315-1, the second matching circuit 315-2, or the third matching circuit 315-3) to improve the performance in transmitting and/or receiving signals in a frequency band supported by the communication method.

According to one example, the multiplexer 309 and the antenna switching circuit 313 may be implemented as a single module (e.g., a front-end module).

The communication processor 301 selects a matching circuit, which is to be electrically connected to the antenna 311 among the matching circuits 315, depending on the frequency band of the communication (e.g., the first communication or the second communication) being performed by the electronic device 101, and the communication processor 301 may control the antenna switching circuit 313 so that the selected matching circuit and the antenna 311 are electrically connected.

According to one example, in case that the antenna 311 is electrically connected to the first matching circuit 315-1 to perform the first communication, the antenna 311 may exhibit higher performance than a case in which the antenna 311 is connected to another matching circuit (e.g., the second matching circuit 315-2 or the third matching circuit 315-3). The communication processor 301 may improve the performance of the antenna 311 by controlling the antenna switching circuit 313 so that the first matching circuit 315-1 and the antenna 311 are electrically connected when the first communication is performed.

In case that the antenna 311 is electrically connected to the second matching circuit 315-2 to perform the second communication, the antenna 311 may exhibit higher performance than a case in which the antenna 311 is connected to another matching circuit (e.g., the first matching circuit 315-1 and the third matching circuit 315-3). The communication processor 301 improves the performance of the antenna 311 by controlling the antenna switching circuit 313 so that the second matching circuit 315-2 and the antenna 311 are electrically connected when the second communication is performed.

The antenna switching circuit 313 improves the performance of the antenna 311 by receiving, from the communication processor 301 or the application processor 303, a control signal for electrically connecting the antenna 311 and the matching circuit corresponding to the frequency band being currently used by the electronic device 101.

According to one example, the electronic device 101 may operate in a mode (e.g., general mode) in which the communication processor 301 is kept in an activated state. In case that the electronic device 101 operates in the mode in which the communication processor 301 is kept in the activated state, the communication processor 301 may select the matching circuit corresponding to the frequency band of the communication used by the electronic device 101 and control the antenna switching circuit 313 so that the selected matching circuit and the antenna 311 are electrically connected.

The communication processor 301 may identify a frequency band assigned to the electronic device 101 from the cellular network that supports the first communication, and the communication processor 301 may select the matching circuit corresponding to the assigned frequency band. The communication processor 301 may transmit, to the antenna switching circuit 313, a control signal including an antenna code for electrically connecting the selected matching circuit and the antenna 311 among the antenna codes stored in the memory (e.g., the memory 130 in FIG. 1). The communication processor 301 may transmit the control signal to the antenna switching circuit 313 through a line that electrically connects the communication processor 301 and the antenna switching circuit 313. The antenna switching circuit 313 may receive the antenna code from the communication processor 301 and electrically connect the selected matching circuit and the antenna 311.

According to one example, the electronic device 101 may operate in a mode in which the communication processor 301 temporarily or non-temporarily switches to the deactivated state. In case that the electronic device 101 operates in the mode in which the communication processor 301 temporarily or non-temporarily switches to the deactivated state, the application processor 303, instead of the communication processor 301, controls the antenna switching circuit 313 through the second communication circuit 307.

In case that the electronic device 101 operates in the mode in which the communication processor 301 temporarily or non-temporarily switches to the deactivated state, the application processor 303 identifies (or monitors) whether the second communication is activated.

In the mode in which the communication processor 301 temporarily or non-temporarily switches to the deactivated state, the application processor 303 activates the second communication for various reasons (e.g., activation of the application for performing the second communication and reception of a user input for activating the second communication).

The application processor 303 may perform a series of operations for improving the performance of the second communication as the second communication is activated. The application processor 303 controls the antenna switching circuit 313 through the second communication circuit 307 to electrically connect the antenna 311 and the second matching circuit 315-2 for improving impedance matching performance in case that the application processor 303 transmits or receives the signal in the frequency band of the second communication to improve the performance of the second communication.

The electronic device 101 may include a line 501 for electrically connecting the second communication circuit 307 and the antenna switching circuit 313 in order for the application processor 303 to implement the control of the antenna switching circuit 313 through the second communication circuit 307 in case that the communication processor 301 is temporarily or non-temporarily deactivated. The application processor 303 may transmit the control signal for controlling the antenna switching circuit 313 to the antenna switching circuit 313 through the second communication circuit 307 and the line 501.

The application processor 303 may select the matching circuit (e.g., the second matching circuit 315-2) corresponding to the frequency band to be used for the second communication. The application processor 303 may transmit the control signal, which includes the antenna code for electrically connecting the selected matching circuit and the antenna 311 among the antenna codes stored in the memory 130, to the antenna switching circuit 313 through the second communication circuit 307 and/or the line 501. The antenna switching circuit 313 may receive the antenna code from the application processor 303 and electrically connect the selected matching circuit and the antenna 311.

According to the above-mentioned example, in case that the communication processor 301 is temporarily or non-temporarily deactivated, the antenna switching circuit 313 may be configured to electrically connect the antenna 311 and one of the matching circuits 315 (e.g., the first matching circuit 315-1, the second matching circuit 315-2, or the third matching circuit 315-3) capable of exhibiting appropriate performance on the basis of the control signal transmitted by the application processor 303, thereby reducing (or preventing) the degradation of the performance of the second communication that occurs when the communication processor 301 is temporarily or non-temporarily deactivated.

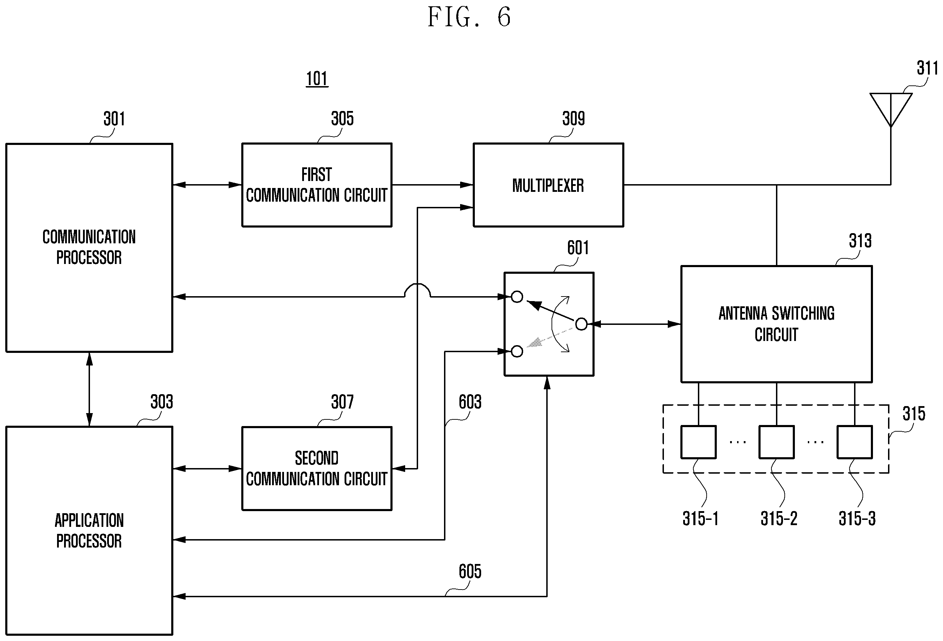

FIG. 6 is a block diagram illustrating the electronic device according to one embodiment.

With reference to FIG. 6, the electronic device (e.g., the electronic device 101 in FIG. 1) includes the communication processor 301 (e.g., the second communication processor 212 in FIG. 2), the application processor 303 (e.g., the processor 120 in FIG. 2), the first communication circuit 305 (e.g., the first RFIC 222 and the second RFIC 224 in FIG. 2), the second communication circuit 307, the multiplexer 309, the antenna 311 (e.g., the first antenna module 242, the second antenna module 244, and the third antenna module 248 in FIG. 2), the antenna switching circuit 313, the matching circuit 315 including the plurality of matching circuits (e.g., the first matching circuit 315-1, the second matching circuit 315-2, or the third matching circuit 315-3), and/or a switch 601.

According to one example, the communication processor 301 may perform various operations for wireless communication with a cellular network. For example, the communication processor 301 may support the establishment of a communication channel in a band to be used for wireless communication with the cellular network and support wireless communication through the established communication channel.

The first communication circuit 305 is a communication circuit that performs first communication. The first communication circuit 305 is electrically connected to the communication processor 301 and performs the first communication under the control of the communication processor 301. The first communication may include cellular communication. According to one example, the first communication may include at least one of third-generation cellular communication, fourth-generation cellular communication, and/or fifth-generation cellular communication. The first communication circuit 305 may perform various operations of processing a signal received from the communication processor 301 to perform the first communication. For example, the first communication circuit 305 may perform an operation of modulating a signal received from the communication processor 301. For example, the first communication circuit 305 may perform a frequency modulation operation of converting a signal in a baseband into a radio frequency (RF) signal to be used for cellular communication. The first communication circuit 305 may perform an operation of demodulating a signal received from the outside through the antenna 311. For example, the first communication circuit 305 may perform a frequency demodulation operation of converting a radio frequency (RF) signal into a signal in a baseband.

The second communication circuit 307 may be a communication circuit that performs second communication. The second communication circuit 307 is electrically connected to the application processor 303 and perform the second communication under the control of the application processor 303. The second communication is communication different from the first communication. The second communication may be communication that may be performed regardless of the control of the communication processor 301. According to one example, the second communication may include near-field wireless communication (e.g., Bluetooth, Wi-Fi, and/or UWB). According to another example, the second communication may include satellite communication that is communication using a non-terrestrial network.

The first communication circuit 305 and the second communication circuit 307 use the same antenna (e.g., the antenna 311) to transmit or receive signals. However, depending on the frequency band of the second communication, the second communication circuit 307 may transmit or receive the signal through another antenna that is not the antenna 311 illustrated in FIG. 6.

The application processor 303 may control various constituent elements of the electronic device 101. The application processor 303 may execute an application non-temporarily or temporarily stored in a memory (e.g., the memory 130 in FIG. 1) on the basis of a user input. The application processor 303 may control various constituent elements related to a service to perform the service provided by the application. For example, in case that the application is an application that performs services (e.g., video calling, voice calling, and/or streaming services) using the first communication or the second communication, the application processor 303 may transmit data (e.g., image data and/or voice data) related to the service to the communication processor 301 or the second communication circuit 307 to transmit the data related to the service. Alternatively, the application processor 303 may control the constituent element (e.g., the display device 160 in FIG. 1 or the audio module 170 in FIG. 1) to receive the data, which are received from the external electronic device (e.g., the external electronic device 104 in FIG. 1), from the communication processor 301 or the second communication circuit 307 and output the received data.

According to one example, a frequency band of the first communication and a frequency band of the second communication may at least partially overlap each other. Therefore, the electronic device 101 may be configured to use the same antenna to receive a signal through the first communication and/or receive a signal through the second communication. The antenna 311 may be an entity that transmits/receives the signal through the first communication and/or transmits/receives the signal through the second communication. The signal received through the antenna 311 may be transmitted to at least one of the first communication circuit 305 and the second communication circuit 307 through the multiplexer 309. The multiplexer 309 may be a constituent element that transmits the signal received through the antenna 311 to at least one of the first communication circuit 305 and the second communication circuit 307. The multiplexer 309 may be changed to various constituent elements including a diplexer, a triplexer, an extractor, a filter, and a switch other than the multiplexer 309. According to one example, in case that the electronic device 101 operates in a frequency division manner in which the electronic device 101 performs the first communication using a particular frequency band and performs the second communication using another frequency band, the multiplexer 309 may transmit the signal in the particular frequency band to the first communication circuit 305 and transmit the signal in another frequency band to the second communication circuit 307. According to one example, the electronic device 101 operates in a time division manner in which the electronic device 101 performs the first communication at a particular time and performs the second communication at a time different from the particular time, the multiplexer 309 may be substituted with a switch. The electronic device 101 (or the communication processor 301) may control the switch to electrically connect the first communication circuit 305 and the antenna 311 for a particular time for which the first communication is performed, and the electronic device 101 (or the communication processor 301) may control the switch to electrically connect the second communication circuit 305 and the antenna 311 for another time for which the second communication is performed.

The antenna switching circuit 313 electrically connects the antenna 311 and one of the matching circuits 315 (e.g., the first matching circuit 315-1, the second matching circuit 315-2, or the third matching circuit 315-3).

The antenna switching circuit 313 outputs under the control of the communication processor 301 or the application processor 303. The antenna switching circuit 313 electrically connects the antenna 311 and one of the matching circuits 315 (e.g., the first matching circuit 315-1, the second matching circuit 315-2, or the third matching circuit 315-3) in response to a control signal transmitted by the communication processor 301 or a control signal transmitted by the application processor 303. The control signal transmitted by the communication processor 301 or the control signal transmitted by the application processor 303 is a signal including information indicating a matching circuit to be connected to the antenna 311 and include an antenna code. The control signal may be transmitted to the antenna switching circuit 313 through various protocols (e.g., a mobile industry processor interface (MIPI), general-purpose input/output (GPIO), and inter-integrated circuit (I2C)) supported by the electronic device 101.

The matching circuit 315 may include various components (e.g., passive elements implemented as capacitors and inductors or active elements implemented as transistors) for performing impedance matching (e.g., matching input impedance or output impedance of the antenna 311 with 50 Ω) of the antenna 311. As described above, the antenna 311 may be used to perform the first communication and/or the second communication and be electrically connected to one of the matching circuits 315 (e.g., the first matching circuit 315-1, the second matching circuit 315-2, or the third matching circuit 315-3) to improve the performance in transmitting and/or receiving signals in a frequency band supported by the communication method.

The switch 601 may electrically connect the antenna switching circuit 313 and one of the communication processor 301 and the application processor 303. The switch 601 may be controlled in response to a control signal transmitted by the application processor 303. The control signal transmitted by the application processor 303 may be transmitted to the switch 601 through a line 605 that connects the application processor 303 and the switch 601. The application processor 303 may control the switch 601 to electrically connect the communication processor 301 and the antenna switching circuit 313 so that the communication processor 301 may transmit the control signal to the antenna switching circuit 313 in case that the communication processor 301 is activated. The application processor 303 may control the switch 601 to electrically connect the application processor 303 and the antenna switching circuit 313 so that the application processor 301 may transmit the control signal to the antenna switching circuit 313 in case that the communication processor 301 is temporarily and/or non-temporarily deactivated.

According to one example, the multiplexer 309, the antenna switching circuit 313, and the switch 601 may be implemented as a single module (e.g., a front-end module).

The communication processor 301 may select a matching circuit (e.g., the first matching circuit 315-1, the second matching circuit 315-2, or the third matching circuit 315-3), which is to be electrically connected to the antenna 311 among the matching circuits 315, depending on the frequency band of the communication (e.g., the first communication or the second communication) being performed by the electronic device 101, and the communication processor 301 may control the antenna switching circuit 313 so that the selected matching circuit and the antenna 311 are electrically connected.

According to one example, in case that the antenna 311 is electrically connected to the first matching circuit 315-1 to perform the first communication, the antenna 311 may exhibit higher performance than a case in which the antenna 311 is connected to another matching circuit (e.g., the second matching circuit 315-2 or the third matching circuit 315-3). The communication processor 301 may improve the performance of the antenna 311 by controlling the antenna switching circuit 313 so that the first matching circuit 315-1 and the antenna 311 are electrically connected when the first communication is performed.

According to one example, in case that the antenna 311 is electrically connected to the second matching circuit 315-2 to perform the second communication, the antenna 311 may exhibit higher performance than a case in which the antenna 311 is connected to another matching circuit (e.g., the first matching circuit 315-1 and the third matching circuit 315-3). The communication processor 301 may improve the performance of the antenna 311 by controlling the antenna switching circuit 313 so that the second matching circuit 315-2 and the antenna 311 are electrically connected when the second communication is performed.

The antenna switching circuit 313 may improve the performance of the antenna 311 by receiving, from the communication processor 301 or the application processor 303, a control signal for electrically connecting the antenna 311 and the matching circuit corresponding to the frequency band being currently used by the electronic device 101.

According to one example, the electronic device 101 may operate in a mode (e.g., general mode) in which the communication processor 301 is kept in an activated state. In case that the electronic device 101 operates in the mode in which the communication processor 301 is kept in the activated state, the application processor 303 may control the switch 601 so that the communication processor 301 and the antenna switching circuit 313 are electrically connected.

The communication processor 301 may select the matching circuit corresponding to the frequency band of the communication used by the electronic device 101 and control the antenna switching circuit 313 so that the selected matching circuit and the antenna 311 are electrically connected.

The communication processor 301 may identify a frequency band assigned to the electronic device 101 from the cellular network that supports the first communication, and the communication processor 301 may select the matching circuit corresponding to the assigned frequency band. The communication processor 301 may transmit a control signal, which includes an antenna code for electrically connecting the selected matching circuit and the antenna 311 among the antenna codes stored in the memory (e.g., the memory 130 in FIG. 1), to the antenna switching circuit 313 through the switch 601. The antenna switching circuit 313 may receive the antenna code from the communication processor 301 and electrically connect the selected matching circuit and the antenna 311.

According to one example, the electronic device 101 may operate in a mode in which the communication processor 301 temporarily or non-temporarily switches to the deactivated state. In case that the electronic device 101 operates in the mode in which the communication processor 301 temporarily or non-temporarily switches to the deactivated state, the application processor 303, instead of the communication processor 301, may control the antenna switching circuit 313.

In case that the electronic device 101 operates in the mode in which the communication processor 301 temporarily or non-temporarily switches to the deactivated state, the application processor 303 may control the switch 601 so that the application processor 303 and the antenna switching circuit 313 are electrically connected.

The application processor 303 may identify (or monitor) whether the second communication is activated.

In the mode in which the communication processor 301 temporarily or non-temporarily switches to the deactivated state, the application processor 303 may activate the second communication for various reasons (e.g., activation of the application for performing the second communication and reception of a user input for activating the second communication).

The application processor 303 may perform a series of operations for improving the performance of the second communication as the second communication is activated. According to one example, the application processor 303 may control the switch 601 to electrically connect the application processor 303 and the antenna switching circuit 313 so that the application processor 301 may transmit the control signal to the antenna switching circuit 313 in case that the communication processor 301 is temporarily and/or non-temporarily deactivated. The application processor 303 may control the antenna switching circuit 313 to electrically connect the antenna 311 and the second matching circuit 315-2 for improving impedance matching performance in case that the application processor 303 transmits or receives the signal in the frequency band of the second communication to improve the performance of the second communication.

The electronic device 101 may include a line 603 for electrically connecting the application processor 303 and the antenna switching circuit 313 in order to implement the control of the antenna switching circuit 313 by the application processor 303 in case that the communication processor 301 is temporarily or non-temporarily deactivated. The line 603 may be electrically connected to the switch 601. The application processor 303 may transmit the control signal for controlling the antenna switching circuit 313 to the antenna switching circuit 313 through the line 603 and the switch 601.

The application processor 303 may receive information indicating a frequency band to be used for the second communication from the second communication circuit 307. The application processor 303 may identify a frequency band to be used for the second communication and select a matching circuit (e.g., the second matching circuit 315-2) corresponding to the frequency band. The application processor 303 may transmit the control signal, which includes the antenna code for electrically connecting the selected matching circuit (e.g., the second matching circuit 315-2) and the antenna 311 among the antenna codes stored in the memory 130, to the antenna switching circuit 313 through the line 603 and the switch 601. The antenna switching circuit 313 may receive the antenna code from the application processor 303 and electrically connect the selected matching circuit and the antenna 311.

According to the above-mentioned example, in case that the communication processor 301 is temporarily or non-temporarily deactivated, the antenna switching circuit 313 may be configured to electrically connect the antenna 311 and one of the matching circuits 315 (e.g., the first matching circuit 315-1, the second matching circuit 315-2, or the third matching circuit 315-3) capable of exhibiting appropriate performance on the basis of the control signal transmitted by the application processor 303, thereby reducing (or preventing) the degradation of the performance of the second communication that occurs when the communication processor 301 is temporarily or non-temporarily deactivated.

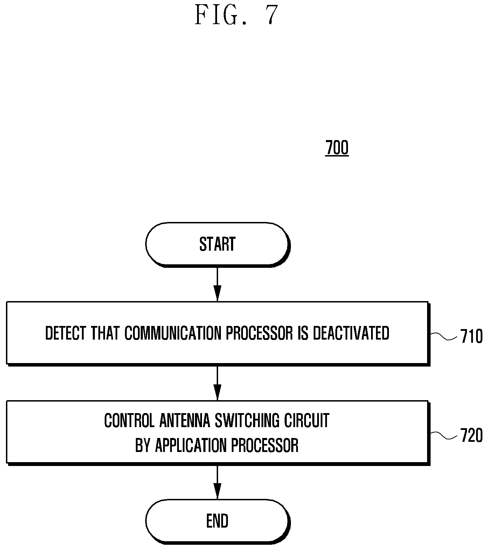

FIG. 7 is an operational flowchart illustrating a method 700 of operating the electronic device according to one example.

The electronic device (e.g., the electronic device 101 in FIG. 1) (or the application processor (e.g., the application processor 303 in FIG. 4) may detect that the communication processor (e.g., the communication processor 301 in FIG. 4) is deactivated at operation 710.

According to one example, the electronic device 101 may operate in a mode (e.g., airplane mode) in which the communication processor 301 temporarily or non-temporarily switches to the deactivated state. In case that the electronic device 101 operates in the mode in which the communication processor 301 temporarily or non-temporarily switches to the deactivated state, the application processor 303, instead of the communication processor 301, may control the antenna switching circuit (e.g., the antenna switching circuit 313 in FIG. 4).

At operation 720, the electronic device 101 may be configured so that the application processor 303 controls the antenna switching circuit 313.

The electronic device 101 may perform a series of operations for improving the performance of the second communication as the second communication is activated when the communication processor 301 is in the deactivated state.

According to one example, the electronic device 101 may control the antenna switching circuit 313 to electrically connect the antenna (e.g., the antenna 311 in FIG. 4) and the second matching circuit (e.g., the second matching circuit 315-2 in FIG. 4) for improving impedance matching performance in case that the signal in the frequency band of the second communication is transmitted or received to improve the performance of the second communication.

The electronic device 101 may include the line (e.g., the line 401 in FIG. 4) for electrically connecting the application processor 303 and the antenna switching circuit 313 in order to implement the control of the antenna switching circuit 313 by the application processor 303 in case that the communication processor 301 is temporarily or non-temporarily deactivated. The application processor 303 may transmit the control signal for controlling the antenna switching circuit 313 to the antenna switching circuit 313 through the line 401.

The application processor 303 may select the matching circuit (e.g., the second matching circuit 315-2) corresponding to the frequency band to be used for the second communication. The application processor 303 may transmit the control signal, which includes the antenna code for electrically connecting the selected matching circuit and the antenna 311 among the antenna codes stored in the memory 130, to the antenna switching circuit 313 through the line 401. The antenna switching circuit 313 may receive the antenna code from the application processor 303 and electrically connect the selected matching circuit and the antenna 311.

According to the above-mentioned example, in case that the communication processor 301 is temporarily or non-temporarily deactivated, the antenna switching circuit 313 may be configured to electrically connect the antenna 311 and one of the matching circuits 315 (e.g., the first matching circuit 315-1, the second matching circuit 315-2, or the third matching circuit 315-3) capable of exhibiting appropriate performance on the basis of the control signal transmitted by the application processor 303, thereby reducing (or preventing) the degradation of the performance of the second communication that occurs when the communication processor 301 is temporarily or non-temporarily deactivated.

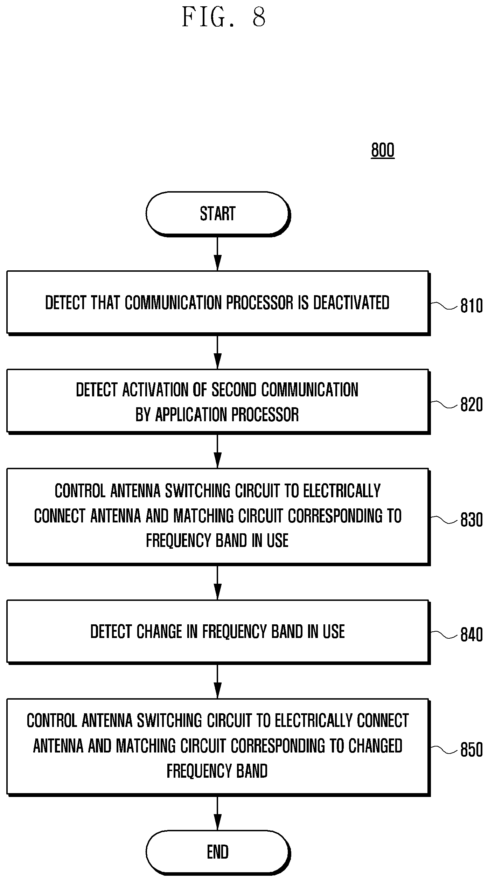

FIG. 8 is an operational flowchart illustrating the method of operating the electronic device according to one example.

The electronic device (e.g., the electronic device 101 in FIG. 4) (or the application processor (e.g., the application processor 303 in FIG. 4) may detect that the communication processor (e.g., the communication processor 301 in FIG. 4) is deactivated at operation 810.

According to one example, the electronic device 101 may operate in a mode (e.g., airplane mode) in which the communication processor 301 temporarily or non-temporarily switches to the deactivated state. In case that the electronic device 101 operates in the mode in which the communication processor 301 temporarily or non-temporarily switches to the deactivated state, the application processor 303, instead of the communication processor 301, may control the antenna switching circuit (e.g., the antenna switching circuit 313 in FIG. 4).

At operation 820, the application processor 303 may detect the activation of the second communication.

In case that the electronic device 101 operates in the mode in which the communication processor 301 temporarily or non-temporarily switches to the deactivated state, the application processor 303 may identify (or monitor) whether the second communication is activated.

In the mode in which the communication processor 301 temporarily or non-temporarily switches to the deactivated state, the application processor 303 may activate the second communication for various reasons (e.g., activation of the application for performing the second communication and reception of a user input for activating the second communication).

At operation 830, the application processor 303 may control the antenna switching circuit 313 to electrically connect the antenna 311 and the matching circuit (e.g., the first matching circuit 315-1, the second matching circuit 315-2, or the third matching circuit 315-3 in FIG. 4) corresponding to the frequency band in use.

The electronic device 101 may perform a series of operations for improving the performance of the second communication as the second communication is activated when the communication processor 301 is in the deactivated state.

According to one example, the electronic device 101 may control the antenna switching circuit 313 to electrically connect the antenna (e.g., the antenna 311 in FIG. 4) and the second matching circuit (e.g., the second matching circuit 315-2 in FIG. 4) for improving impedance matching performance in case that the signal in the frequency band of the second communication is transmitted or received to improve the performance of the second communication.

The electronic device 101 may include a line 401 for electrically connecting the application processor 303 and the antenna switching circuit 313 in order to implement the control of the antenna switching circuit 313 by the application processor 303 in case that the communication processor 301 is temporarily or non-temporarily deactivated. The application processor 303 may transmit the control signal for controlling the antenna switching circuit 313 to the antenna switching circuit 313 through the line 401.

The application processor 303 may select the matching circuit (e.g., the second matching circuit 315-2) corresponding to the frequency band to be used for the second communication. The application processor 303 may transmit the control signal, which includes the antenna code for electrically connecting the selected matching circuit and the antenna 311 among the antenna codes stored in the memory 130, to the antenna switching circuit 313 through the line 401. The antenna switching circuit 313 may receive the antenna code from the application processor 303 and electrically connect the selected matching circuit and the antenna 311.

According to the above-mentioned example, in case that the communication processor 301 is temporarily or non-temporarily deactivated, the antenna switching circuit 313 may be configured to electrically connect the antenna 311 and one of the matching circuits 315 (e.g., the first matching circuit 315-1, the second matching circuit 315-2, or the third matching circuit 315-3) capable of exhibiting appropriate performance on the basis of the control signal transmitted by the application processor 303, thereby reducing (or preventing) the degradation of the performance of the second communication that occurs when the communication processor 301 is temporarily or non-temporarily deactivated.

At operation 840, the application processor 303 may detect a change in frequency band in use.

The application processor 303 may control the antenna switching circuit 313 so that the appropriate matching circuit is electrically connected to the antenna 311 even in case that the frequency band of the second communication is changed.

The application processor 303 may detect a change in frequency band of the second communication. According to one example, the application processor 303 may detect that a process in which the second communication is performed over a first frequency band (e.g., 2.4 GHz) of the second communication is changed so that the second communication is performed over a second frequency band (e.g., 5 GHz) of the second communication.

At operation 850, the application processor 303 may control the antenna switching circuit 313 to electrically connect the antenna 311 and the matching circuit corresponding to the changed frequency band.

According to one example, the application processor 303 may control the antenna switching circuit 313 to electrically connect the antenna 311 and the matching circuit (e.g., the third matching circuit 315-3) for improving impedance matching performance in case that the application processor 303 transmits or receives the signal of the second frequency band to improve the performance of the second communication.

The application processor 303 may select the matching circuit (e.g., the third matching circuit 315-3) corresponding to the second frequency band. The application processor 303 may transmit the control signal, which includes the antenna code for electrically connecting the selected matching circuit and the antenna 311 among the antenna codes stored in the memory 130, to the antenna switching circuit 313 through the line 401. The antenna switching circuit 313 may receive the antenna code from the application processor 303 and electrically connect the selected matching circuit and the antenna 311.

The electronic device (e.g., the electronic device 101 in FIG. 4) according to one example may include the communication processor (e.g., the communication processor 301 in FIG. 4). The electronic device 101 may include the application processor (e.g., the application processor 303 in FIG. 4). The electronic device 101 may include the first communication circuit (e.g., the first communication circuit 305 in FIG. 4) electrically connected to the communication processor 301 and configured to perform the first communication. The electronic device 101 may include the second communication circuit (e.g., the second communication circuit 307 in FIG. 4) electrically connected to the application processor 303 and configured to perform the second communication. The electronic device 101 may include the antenna (e.g., the antenna 311 in FIG. 4) that transmits and/or receives signals for the first communication and/or the second communication. The electronic device 101 may include the multiplexer (e.g., the multiplexer 309 in FIG. 4) that electrically connects the antenna 311 and at least one of the first communication circuit 305 and the second communication circuit 307. The electronic device 101 may include the antenna switching circuit (e.g., the antenna switching circuit 313 in FIG. 4) that connects the antenna and at least one of the plurality of matching circuits (e.g., the plurality of matching circuits 315 in FIG. 4). The antenna switching circuit 313 may be controlled by the application processor 303 in case that the communication processor 301 is deactivated.

In the electronic device 101 according to one example, the antenna switching circuit 313 may be controlled by the communication processor 301 in case that the communication processor 301 is activated.

In the electronic device 101 according to one example, the electronic device 101 may further include the line (e.g., the line 401 in FIG. 4) connected between the application processor 303 and the antenna switching circuit 313 and configured to transmit the control signal for controlling the antenna switching circuit 313.

In the electronic device 101 according to one example, the application processor 303 may be configured to transmit, to the antenna switching circuit 313, the control signal for controlling the antenna switching circuit 313 on the basis of the entry into the mode in which the communication processor 301 is deactivated.

The electronic device 101 according to one example may further include the switch (e.g., the switch 601 in FIG. 6) that electrically connects the antenna switching circuit 313 and one of the application processor 303 and the communication processor 301.

In the electronic device 101 according to one example, the switch 601 may be configured to disconnect the communication processor 301 and the antenna switching circuit 313 and connect the application processor 303 and the antenna switching circuit 313 when the communication processor 301 is deactivated.

The electronic device 101 according to one example may further include the line (e.g., the line 605 in FIG. 6) connected between the application processor 303 and the switch 601 and configured to transmit the signal for controlling the switch 601.

In the electronic device 101 according to one example, the application processor 303 may be configured to control the switch 601 to electrically connect the application processor 303 and the antenna switching circuit 313 on the basis of the entry into the mode in which the communication processor 301 is deactivated.

In the electronic device 101 according to one example, the first communication may include cellular wireless communication.

In the electronic device 101 according to one example, the second communication may include near-field wireless communication, communication for positioning, and/or satellite communication.

A front-end module according to one example may include the multiplexer (e.g., the multiplexer 309 in FIG. 4) that electrically connects the antenna 311 and at least one of the first communication circuit (e.g., the first communication circuit 305 in FIG. 4) electrically connected to the communication processor (e.g., the communication processor 301 in FIG. 4) and configured to perform the first communication and the second communication circuit 307 electrically connected to the application processor (e.g., the application processor 303 in FIG. 4) and configured to perform the second communication. The front-end module may include the antenna switching circuit (e.g., the antenna switching circuit 313 in FIG. 4) that electrically connects the antenna and at least one of the plurality of matching circuits (e.g., the plurality of matching circuits 315 in FIG. 4). The antenna switching circuit 313 may be controlled by the application processor 303 in case that the communication processor 301 is deactivated.

In the front-end module according to one example, the antenna switching circuit 313 may be controlled by the communication processor 301 in case that the communication processor 301 is activated.

The front-end module according to one example may further include the line (e.g., the line 401 in FIG. 4) connected between the application processor 303 and the antenna switching circuit 313 and configured to transmit the control signal for controlling the antenna switching circuit 313.

In the front-end module according to one example, the antenna switching circuit 313 may receive the control signal for controlling the antenna switching circuit 313 on the basis of the entry into the mode in which the communication processor 301 is deactivated. The antenna switching circuit 313 may be configured to electrically connect the antenna 311 and one of the plurality of matching circuits 315 in response to the reception of the control signal.

The front-end module according to one example may further include the switch (e.g., the switch 601 in FIG. 6) that electrically connects the antenna switching circuit 313 and one of the application processor 303 and the communication processor 301.

In the front-end module according to one example, the switch 601 may be configured to disconnect the communication processor 301 and the antenna switching circuit 313 and connect the application processor 303 and the antenna switching circuit 313 when the communication processor 301 is deactivated.

The front-end module according to one example may further include the line (e.g., the line 605 in FIG. 6) connected between the application processor 303 and the switch 601 and configured to transmit the signal for controlling the switch 601.

In the front-end module according to one example, the switch 601 may be configured to electrically connect the application processor 303 and the antenna switching circuit 313 on the basis of the entry into the mode in which the communication processor 301 is deactivated.

In the front-end module according to one example, the first communication may include cellular wireless communication.

In the front-end module according to one example, the second communication may include near-field wireless communication, communication for positioning, and/or satellite communication.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

According to an aspect of the disclosure, the antenna switching circuit of the electronic device may be configured to be controlled by the communication processor when the communication processor is activated.

According to a further aspect of the disclosure, the electronic device may further comprise a line connected to the antenna switching circuit and configured to transmit a control signal from the application processor for controlling the antenna switching circuit.

According to a further aspect of the disclosure, the application processor of the electronic device may be configured to transmit, to the antenna switching circuit, a control signal for controlling the antenna switching circuit on the basis of an entry into a mode in which the communication processor is deactivated.

According to a further aspect of the disclosure, the electronic device may further comprise a switch configured to electrically connect the antenna switching circuit and one of the application processor and the communication processor.

According to a further aspect of the disclosure, the switch of the electronic device may be configured to disconnect the communication processor and the antenna switching circuit and connect the application processor and the antenna switching circuit when the communication processor is deactivated.

According to a further aspect of the disclosure, the electronic device may further comprise a line connected between the application processor and the switch and configured to transmit a signal for controlling the switch.

According to a further aspect of the disclosure, the application processor of the electronic device may be configured to control the switch to electrically connect the application processor and the antenna switching circuit on the basis of an entry into a mode in which the communication processor is deactivated.

According to a further aspect of the disclosure, the first communication performed by the first communication circuit of the electronic device may comprise cellular wireless communication.

According to a further aspect of the disclosure, the second communication performed by the second communication circuit of the electronic device may comprise near-field wireless communication, communication for positioning, and/or satellite communication.

According to a further aspect of the disclosure, the antenna switching circuit of the front-end module may be configured to be controlled by the communication processor when the communication processor is activated.

According to a further aspect of the disclosure, the front-end module may further comprise a line connected to the antenna switching circuit and configured to transmit a control signal from the application processor for controlling the antenna switching circuit.

According to a further aspect of the disclosure, the antenna switching circuit of the front-end module may be configured to receive, from the application processor, a control signal for controlling the antenna switching circuit on the basis of an entry into a mode in which the communication processor is deactivated, and the antenna switching circuit is configured to electrically connect the antenna and one of the plurality of matching circuits in response to reception of the control signal.

According to a further aspect of the disclosure, the front-end module may further comprise a switch configured to electrically connect the antenna switching circuit and one of the application processor and the communication processor.

According to a further aspect of the disclosure, the switch of the front-end module may be configured to disconnect the communication processor and the antenna switching circuit and connect the application processor and the antenna switching circuit when the communication processor is deactivated.

According to a further aspect of the disclosure, the front-end module may further comprise a line connected to the switch and configured to transmit a signal from the application processor for controlling the switch.

According to a further aspect of the disclosure, the switch of the front-end module may be configured to electrically connect the application processor and the antenna switching circuit on the basis of an entry into a mode in which the communication processor is deactivated.

According to a further aspect of the disclosure, the first communication performed by the first communication circuit of the front-end module may comprise cellular wireless communication.

According to a further aspect of the disclosure, the second communication performed by the second communication circuit of the front-end module may comprise near-field wireless communication, communication for positioning, and/or satellite communication.

According to a still further aspect of the disclosure, an electronic device is provided which may comprise:
a communication processor;
an application processor;
a first communication circuit electrically connected to the communication processor and configured to perform first communication;
a second communication circuit electrically connected to the application processor and
configured to perform second communication;
an antenna configured to transmit and/or receive a signal for the first communication and/or the second communication; and
a front-end module comprising:
   a multiplexer configured to electrically connect the antenna and at least one of the first communication circuit electrically connected to the communication processor and configured to perform first communication and the second communication circuit electrically connected to the application processor and configured to perform second communication; and
   an antenna switching circuit configured to electrically connect at least one of a plurality of matching circuits to the antenna,
   wherein the antenna switching circuit is controlled by the application processor when the communication processor is deactivated.

## Claims

1. An electronic device (101) comprising:
a communication processor (301);
an application processor (303);
a first communication circuit (305) electrically connected to the communication processor (301) and configured to perform cellular communication;
a second communication circuit (307) configured to perform short-range wireless communication, the second communication circuit (307) being electrically connected to the application processor (303);
an antenna (311) configured to transmit and/or receive a signal for the cellular communication and/or the short-range wireless communication;
a multiplexer (309) configured to electrically connect the antenna (311) and at least one of the first communication circuit (305) and the second communication circuit (307); and
an antenna switching circuit (313) configured to connect at least one of a plurality of matching circuits (315; 315-1, 315-2, 315-3) to the antenna (311), the antenna switching circuit (313) being connected to the application processor (303) and the communication processor (301),
wherein the antenna switching circuit (313) is configured to be controlled by the application processor (303) while the communication processor (301) is deactivated according to activation of airplane mode and the antenna switching circuit (313) is configured to be controlled by the communication processor (301) according to deactivation of the airplane mode.

2. The electronic device (101) of claim 1, further comprising:
a line (401; 501; 603) connected to the antenna switching circuit (313) and configured to transmit a control signal from the application processor (303) for controlling the antenna switching circuit (313).

3. The electronic device (101) of any one of claims 1 to 2, wherein the application processor (303) is configured to transmit, to the antenna switching circuit (313), a control signal for controlling the antenna switching circuit on the basis of an entry into a mode in which the communication processor (301) is deactivated.

4. The electronic device (101) of claim 1, further comprising:
a switch (601) configured to electrically connect the antenna switching circuit (313) and one of the application processor (303) and the communication processor (301).

5. The electronic device (101) of claim 4, wherein the switch (601) is configured to disconnect the communication processor (301) and the antenna switching circuit (313) and connect the application processor (303) and the antenna switching circuit (313) while the communication processor (301) is deactivated.

6. The electronic device (101) of claim 4 or claim 5, further comprising:
a line (605) connected between the application processor (303) and the switch (601) and configured to transmit a signal for controlling the switch (601).

7. The electronic device (101) of any one of claims 4 to 6, wherein the application processor (303) is configured to control the switch (601) to electrically connect the application processor (303) and the antenna switching circuit (313) on the basis of an entry into a mode in which the communication processor (301) is deactivated.

8. A front-end module for use in an electronic device (101), comprising:
a multiplexer (309) configured to electrically connect an antenna (311) and at least one of a first communication circuit (305) electrically connected to a communication processor (301) and configured to perform cellular communication and a second communication circuit (307) electrically connected to an application processor (303) and configured to perform short-range wireless communication; and
an antenna switching circuit (313) configured to electrically connect at least one of a plurality of matching circuits (315; 315-1, 315-2, 315-3) to the antenna (311), the antenna switching circuit (313) being connected to the application processor (303) and the communication processor (301),
wherein the antenna switching circuit (313) is configured to be controlled by the application processor (303) while the communication processor (301) is deactivated according to activation of airplane mode and the antenna switching circuit (313) is configured to be controlled by the communication processor (301) according to deactivation of the airplane mode.

9. The front-end module of claim 8, further comprising:
a line (401; 501; 603) connected to the antenna switching circuit (313) and configured to transmit a control signal from the application processor (303) for controlling the antenna switching circuit (313).

10. The front-end module of any one of claims 8 to 9, wherein the antenna switching circuit (313) is configured to receive, from the application processor (303), a control signal for controlling the antenna switching circuit (313) on the basis of an entry into a mode in which the communication processor (301) is deactivated, and the antenna switching circuit (313) is configured to electrically connect the antenna (3 11) and one of the plurality of matching circuits (315; 315-1, 315-2, 315-3) in response to reception of the control signal.

11. The front-end module of any one of claims 8 to 10, further comprising:
a switch (601) configured to electrically connect the antenna switching circuit (313) and one of the application processor (303) and the communication processor (301).

## Patentansprüche

1. Elektronische Vorrichtung (101), umfassend:
einen Kommunikationsprozessor (301);
einen Anwendungsprozessor (303);
eine erste Kommunikationsschaltung (305), die elektrisch mit dem Kommunikationsprozessor (301) verbunden und konfiguriert ist, um eine zellulare Kommunikation durchzuführen;
eine zweite Kommunikationsschaltung (307), die konfiguriert ist, um drahtlose Nahbereichskommunikation durchzuführen, wobei die zweite Kommunikationsschaltung (307) elektrisch mit dem Anwendungsprozessor (303) verbunden ist;
eine Antenne (311), die zum Übertragen und/oder Empfangen eines Signals für die zellulare Kommunikation und/oder die drahtlose Nahbereichskommunikation konfiguriert ist;
einen Multiplexer (309), der so konfiguriert ist, dass er die Antenne (311) und mindestens eine der ersten Kommunikationsschaltung (305) und der zweiten Kommunikationsschaltung (307) elektrisch verbindet; und
einen Antennenschaltkreis (313), der konfiguriert ist, um mindestens eine von einer Vielzahl von Anpassungsschaltungen (315; 315-1, 315-2, 315-3) mit der Antenne (311) zu verbinden, wobei der Antennenschaltkreis (313) mit dem Anwendungsprozessor (303) und dem Kommunikationsprozessor (301) verbunden ist,
wobei der Antennenschaltkreis (313) so konfiguriert ist, dass er vom Anwendungsprozessor (303) gesteuert wird, während der Kommunikationsprozessor (301) entsprechend der Aktivierung des Flugzeugmodus deaktiviert ist, und der Antennenschaltkreis (313) so konfiguriert ist, dass er vom Kommunikationsprozessor (301) entsprechend der Deaktivierung des Flugzeugmodus gesteuert wird.

2. Elektronische Vorrichtung (101) nach Anspruch 1, ferner umfassend:
eine Leitung (401; 501; 603), die mit dem Antennenschaltkreis (313) verbunden und konfiguriert ist, um ein Steuersignal vom Anwendungsprozessor (303) zum Steuern des Antennenschaltkreises (313) zu übertragen.

3. Elektronische Vorrichtung (101) nach einem der Ansprüche 1 bis 2, wobei der Anwendungsprozessor (303) so konfiguriert ist, dass er ein Steuersignal an den Antennenschaltkreis (313) überträgt, um den Antennenschaltkreis auf der Grundlage eines Eintritts in einen Modus zu steuern, in dem der Kommunikationsprozessor (301) deaktiviert ist.

4. Elektronische Vorrichtung (101) nach Anspruch 1, ferner umfassend:
einen Schalter (601), der so konfiguriert ist, dass er den Antennenschaltkreis (313) und einen des Anwendungsprozessors (303) oder des Kommunikationsprozessors (301) elektrisch verbindet.

5. Elektronische Vorrichtung (101) nach Anspruch 4, wobei der Schalter (601) so konfiguriert ist, dass er den Kommunikationsprozessor (301) und den Antennenschaltkreis (313) trennt und den Anwendungsprozessor (303) und den Antennenschaltkreis (313) verbindet, während der Kommunikationsprozessor (301) deaktiviert ist.

6. Elektronische Vorrichtung (101) nach Anspruch 4 oder Anspruch 5, ferner umfassend:
eine Leitung (605), die zwischen dem Anwendungsprozessor (303) und dem Schalter (601) angeschlossen und konfiguriert ist, um ein Signal zum Steuern des Schalters (601) zu übertragen.

7. Elektronische Vorrichtung (101) nach einem der Ansprüche 4 bis 6, wobei der Anwendungsprozessor (303) so konfiguriert ist, dass er den Schalter (601) steuert, um den Anwendungsprozessor (303) und den Antennenschaltkreis (313) auf der Grundlage eines Eintritts in einen Modus, in dem der Kommunikationsprozessor (301) deaktiviert ist, elektrisch zu verbinden.

8. Frontend-Modul zur Verwendung in einer elektronischen Vorrichtung (101), umfassend:
einen Multiplexer (309), der so konfiguriert ist, dass er eine Antenne (311) und mindestens eine von einer ersten Kommunikationsschaltung (305), die elektrisch mit einem Kommunikationsprozessor (301) verbunden und so konfiguriert ist, dass sie eine zellulare Kommunikation durchführt, und einer zweiten Kommunikationsschaltung (307), die elektrisch mit einem Anwendungsprozessor (303) verbunden und so konfiguriert ist, dass sie eine drahtlose Nahbereichskommunikation durchführt, elektrisch verbindet; und
einen Antennenschaltkreis (313), der konfiguriert ist, um mindestens eine von einer Vielzahl von Anpassungsschaltungen (315; 315-1, 315-2, 315-3) mit der Antenne (311) elektrisch zu verbinden, wobei der Antennenschaltkreis (313) mit dem Anwendungsprozessor (303) und dem Kommunikationsprozessor (301) verbunden ist,
wobei der Antennenschaltkreis (313) so konfiguriert ist, dass er vom Anwendungsprozessor (303) gesteuert wird, während der Kommunikationsprozessor (301) entsprechend der Aktivierung des Flugzeugmodus deaktiviert ist, und der Antennenschaltkreis (313) so konfiguriert ist, dass er vom Kommunikationsprozessor (301) entsprechend der Deaktivierung des Flugzeugmodus gesteuert wird.

9. Frontend-Modul nach Anspruch 8, ferner umfassend:
eine Leitung (401; 501; 603), die mit dem Antennenschaltkreis (313) verbunden und konfiguriert ist, um ein Steuersignal vom Anwendungsprozessor (303) zum Steuern des Antennenschaltkreises (313) zu übertragen.

10. Frontend-Modul nach einem der Ansprüche 8 bis 9, wobei der Antennenschaltkreis (313) so konfiguriert ist, dass er von dem Anwendungsprozessor (303) ein Steuersignal zum Steuern des Antennenschaltkreises (313) auf der Grundlage eines Eintritts in einen Modus empfängt, in dem der Kommunikationsprozessor (301) deaktiviert ist, und der Antennenschaltkreis (313) so konfiguriert ist, dass er als Reaktion auf den Empfang des Steuersignals die Antenne (311) und eine der Vielzahl von Anpassungsschaltungen (315; 315-1, 315-2, 315-3) elektrisch verbindet.

11. Frontend-Modul nach einem der Ansprüche 8 bis 10, ferner umfassend:
einen Schalter (601), der so konfiguriert ist, dass er den Antennenschaltkreis (313) und einen des Anwendungsprozessors (303) oder des Kommunikationsprozessors (301) elektrisch verbindet.

## Revendications

1. Dispositif électronique (101), comprenant :
un processeur de communication (301) ;
un processeur d'application (303) ;
un premier circuit de communication (305) connecté électriquement au processeur de communication (301) et configuré pour effectuer une communication cellulaire ;
un second circuit de communication (307) configuré pour effectuer une communication à courte portée sans fil, le second circuit de communication (307) étant connecté électriquement au processeur d'application (303) ;
une antenne (311) configurée pour transmettre et/ou recevoir un signal pour la communication cellulaire et/ou la communication à courte portée sans fil ;
un multiplexeur (309) configuré pour connecter électriquement l'antenne (311) et au moins l'un du premier circuit de communication (305) et du second circuit de communication (307) ; et
un circuit de commutation d'antenne (313) configuré pour connecter au moins un d'une pluralité de circuits d'adaptation (315 ; 315-1, 315-2, 315-3) à l'antenne (311), le circuit de commutation d'antenne (313) étant connecté au processeur d'application (303) et au processeur de communication (301),
dans lequel le circuit de commutation d'antenne (313) est configuré pour être commandé par le processeur d'application (303) alors que le processeur de communication (301) est désactivé en fonction de l'activation du mode avion et le circuit de commutation d'antenne (313) est configuré pour être commandé par le processeur de communication (301) en fonction de la désactivation du mode avion.

2. Dispositif électronique (101) de la revendication 1, comprenant en outre :
une ligne (401 ; 501 ; 603) connectée au circuit de commutation d'antenne (313) et configurée pour transmettre un signal de commande provenant du processeur d'application (303) pour commander le circuit de commutation d'antenne (313).

3. Dispositif électronique (101) de l'une quelconque des revendications 1 à 2, dans lequel le processeur d'application (303) est configuré pour transmettre, au circuit de commutation d'antenne (313), un signal de commande pour commander le circuit de commutation d'antenne sur la base d'une entrée dans un mode dans lequel le processeur de communication (301) est désactivé.

4. Dispositif électronique (101) de la revendication 1, comprenant en outre :
un commutateur (601) configuré pour connecter électriquement le circuit de commutation d'antenne (313) et l'un du processeur d'application (303) et du processeur de communication (301).

5. Dispositif électronique (101) de la revendication 4, dans lequel le commutateur (601) est configuré pour déconnecter le processeur de communication (301) et le circuit de commutation d'antenne (313) et connecter le processeur d'application (303) et le circuit de commutation d'antenne (313) alors que le processeur de communication (301) est désactivé.

6. Dispositif électronique (101) de la revendication 4 ou de la revendication 5, comprenant en outre :
une ligne (605) connectée entre le processeur d'application (303) et le commutateur (601) et configurée pour transmettre un signal permettant de commander le commutateur (601).

7. Dispositif électronique (101) de l'une des revendications 4 à 6, dans lequel le processeur d'application (303) est configuré pour commander le commutateur (601) afin de connecter électriquement le processeur d'application (303) et le circuit de commutation d'antenne (313) sur la base d'une entrée dans un mode dans lequel le processeur de communication (301) est désactivé.

8. Module frontal destiné à être utilisé dans un dispositif électronique (101), comprenant :
un multiplexeur (309) configuré pour connecter électriquement une antenne (311) et au moins l'un d'un premier circuit de communication (305) connecté électriquement à un processeur de communication (301) et configuré pour effectuer une communication cellulaire ; et d'un second circuit de communication (307) connecté électriquement à un processeur d'application (303) et configuré pour effectuer une communication à courte portée sans fil ; et
un circuit de commutation d'antenne (313) configuré pour connecter électriquement au moins un d'une pluralité de circuits d'adaptation (315 ; 315-1, 315-2, 315-3) à l'antenne (311), le circuit de commutation d'antenne (313) étant connecté au processeur d'application (303) et au processeur de communication (301),
dans lequel le circuit de commutation d'antenne (313) est configuré pour être commandé par le processeur d'application (303) alors que le processeur de communication (301) est désactivé en fonction de l'activation du mode avion et le circuit de commutation d'antenne (313) est configuré pour être commandé par le processeur de communication (301) en fonction de la désactivation du mode avion.

9. Module frontal de la revendication 8, comprenant en outre :
une ligne (401 ; 501 ; 603) connectée au circuit de commutation d'antenne (313) et configurée pour transmettre un signal de commande provenant du processeur d'application (303) pour commander le circuit de commutation d'antenne (313).

10. Module frontal de l'une des revendications 8 à 9, dans lequel le circuit de commutation d'antenne (313) est configuré pour recevoir, du processeur d'application (303), un signal de commande pour commander le circuit de commutation d'antenne (313) sur la base d'une entrée dans un mode dans lequel le processeur de communication (301) est désactivé, et le circuit de commutation d'antenne (313) est configuré pour connecter électriquement l'antenne (311) et l'un de la pluralité de circuits d'adaptation (315 ; 315-1, 315-2, 315-3) en réponse à la réception du signal de commande.

11. Module frontal de l'une quelconque des revendications 8 à 10, comprenant en outre :
un commutateur (601) configuré pour connecter électriquement le circuit de commutation d'antenne (313) et l'un du processeur d'application (303) et du processeur de communication (301).
